# EUROPÄISCHE PATENTSCHRIFT

(11) **EP 0 894 354 B1**
(45) Veröffentlichungstag und Bekanntmachung des Hinweises auf die Patenterteilung: **06.06.2001**
(21) Anmeldenummer: 97919326.5
(22) Anmeldetag: 10.04.1997
(51) Int. Cl.: H02G 15/10, H02G 15/18

(54) **ELEKTRISCHE KABELVERBINDUNG**
ELECTRIC CABLE CONNECTION
CONNEXION ELECTRIQUE DE CABLES

(30) Priorität: 15.04.1996 DE 19614853
(43) Veröffentlichungstag der Anmeldung: 03.02.1999
(73) Patentinhaber: CELLPACK GMBH, D-79761 Waldshut-Tiengen (DE)
(72) Erfinder: SENS, Giso, D-79862 Höchenschwand (DE); KRETSCHMAR, Frank, Michael, D-79761 Waldshut-Tiengen (DE); MITSCHAK, Henry, D-79793 Wutöschingen (DE); HOFFMANN, Hans, D-79774 Albbruck (DE)
(74) Vertreter: Allgeier, Kurt
(86) Internationale Anmeldenummer: EP9701767
(87) Internationale Veröffentlichungsnummer: WO9739507

(56) Entgegenhaltungen:
- EP-A- 0 216 613
- DE-U- 8 503 674
- DE-U- 9 004 349
- GB-A- 2 084 498
- US-A- 4 207 429
- PATENT ABSTRACTS OF JAPAN vol. 14, no. 584 (E-1018), 27.Dezember 1990 & JP 02 254917 A (SUMITOMO 3M), 15.Oktober 1990,

## Beschreibung

Die Erfindung bezieht sich auf eine elektrische Kabelverbindung für ein- oder mehradrige Energie- und Steuerkabel, bei welcher die elektrisch isolierende und abdichtende Umhüllung in bekannter Weise mittels einer Giessharz- oder einer Schrumpfmuffe hergestellt ist. Bei einer solchen Kabelverbindung (DE 35 33 375 C2) ist es bekannt, die Adern im Bereich der Verbinder mit einer formstabilen Lage aus einem anorganischen und/oder keramischen Fasermaterial zu umgeben und diese mit einem die Aderisolierung überdeckenden Schrumpfschlauch zu umschliessen. Die Fasermaterial-Lage soll gegen Feuer widerstandsfähig sein und kann aus einem Wickel oder einem aufmodellierten Körper bestehen.

Bei derartigen Kabelverbindungen sollen im Brandfalle die im wesentlichen formstabilen Lagen erhalten bleiben und zu Kurzschlüssen führende Berührungen der Adern unterbinden, wenn die Kunststoffbestandteile der Kabelverbindung bereits abgeschmolzen bzw. verbrannt sind. Die Gefahr dieses schädlichen Berührens der Adern ergibt sich aus den durch thermisch bedingten Längenänderungen auftretenden mechanischen Kräfte und kann verringert werden, wenn die Kabeladern durch bekannte Vorrichtungen (DE 90 04 349 U1) in ihren Positionen gegeneinander beabstandet gesichert werden.

Kabelverbindungen dieser Art haben bei hohen thermischen Belastungen jedoch keine ausreichende Widerstandsfähigkeit und Funktionsfähigheit gezeigt.

Es sind auch Kabelverbindungen bekanntgeworden, bei denen Schrumpfschläuche aus einem selbstverlöschenden Material zu einem gewissen Brandschutz eingesetzt werden. Auch diese können jedoch hohen thermischen Belastungen im Brandfalle nicht widerstehen; sie brennen nach einer gewissen Zeit der Flammenlast vollständig ab und gewähren dann die Funktionsfähigkeit der Kabelverbindung nicht mehr. Auch bekannte Giessharzformstoffe, die mit Additiven zur Selbstverlöschung eingesetzt werden zeigen nur eine begrenzte Wirksamkeit im Brandfall und sind nicht geeignet, die hohen Anforderungen, wie sie in den einschlägigen Normen IEC 331 oder DIN 4102 Teil 12 gefordert werden, zu erfüllen.

Diese Kunststoffe werden überwiegend mit einem halogenhaltigen Flammschutzmittel und Diantimontrioxid als Synergisten ausgerüstet. Auch ist eine Ausrüstung der Kunststoffe mit halogenfreien Flammschutzmitteln, wie z.B. Hydroxiden oder auch Phosphorverbindungen bekannt. Durch diese Systeme kann die Flammbeständigkeit der Kabel, in Verbindung mit weiteren flammbeständigen Materialien wie Glimmerbewicklungen usw. auf den Einzeladern, für einen ausreichenden Zeitraum erreicht werden.

Die hohen Anforderungen an den Brandschutz und die Funktionsfähigkeit an die Kabel bzw. die Kabelverbindungen, die insbesondere in öffentlichen Gebäuden und Gebäudeteilen, wie z.B. Fahrstuhlschächten, oder auch auf Ölplattformen gefordert werden, verlangen eine besondere Gestaltung der Kabelverbindungen. Durch diese ist der Isolationserhalt (FE) oder Funktionserhalt (E) der Kabelverbindungen, in Abhängigkeit von den jeweiligen örtlichen Bedingungen von mindestens 30 bis zu 180 Minuten zu gewährleisten.

Auch eine Kabelverbindung nach der eingangs zitierten DE 35 33 375 C2, bei der feuerfestes Fasermaterial unter dem Schrumpfschlauch der Aderverbindung angeordnet ist, erfüllt wegen der auftretenden hohen thermischen und mechanischen Belastungen im Brandfall die geforderte Funktionsfähigkeit nicht zuverlässig.

Es sind auch Lösungen mit stark gefüllten Schutzwickeln bekannt, bei denen nachteilig ist, dass diese unter der Hitzewirkung versintern. Dadurch entsteht eine zwar feuerfeste, jedoch poröse Schicht. Trotz der guten thermischen Resistenz dieser Schicht hat sie den Nachteil, dass die sich bildende Feuchtigkeit aus den brennbaren Bestandteilen des Kabels bzw. der Kabelverbindung in diese poröse Schicht diffundiert, und dass dadurch leitfähige Pfade zwischen den Einzeladern oder einer oder mehreren Adern und dem Erdpotential gebildet werden, was zu Kurzschlüssen führen kann.

Weiterhin hat sich erwiesen, dass unter Wirkung der auftretenden starken mechanischen Kräfte infolge der Hitzeeinwirkung im Brandfall trotz der Verwendung von Beabstandungsvorrichtungen die Einzeladerverbindungen gegeneinander verschieben oder die Lagen aus dem Fasermaterial so gedrückt werden können, dass eine zuverlässige elektrische Verbindung ohne Kurzschlüsse nicht sichergestellt werden kann.

Ein weiterer erheblicher Nachteil dieser bekannten Kabelverbindung ist noch darin zu sehen, dass die Montagen sehr umständlich und zeitaufwendig sind. Sowohl die einzelnen Wickel um die Einzeladerverbindungen und auch die gesamte Kabelverbindung erfordern insbesondere bei den häufig vorkommenden komplizierten Einbausituationen vor Ort ein hohes Mass an Sorgfalt und damit Zeitaufwand, um eine sichere und zuverlässige Kabelverbindung herzustellen. Häufig befinden sich die Kabeltragelemente an schwer zugänglichen Orten, z.B. unmittelbar unter der Decke oder in Ecken eines Raumes und der Monteur muss dann die verschiedenen Arbeitsschritte unter sehr beengten Bedingungen ausführen. Besonders das Aufbringen von Flammschutzwickeln aus feuerbeständigem Fasermaterial auf die Aderverbindungen erweist sich als kompliziert, da ein ausreichend grosser freier Montageraum dazu notwendig ist, eine Voraussetzung, die an solchen Orten oft nicht ermöglicht werden kann.

Aus diesen Gegebenheiten leitet sich die Aufgabe der Erfindung dahingehend ab, eine Kabelverbindung zu schaffen, die sowohl den hohen Brandschutzanforderungen für öffentliche Gebäude und ähnliche Anlagen voll genügt und gleichzeitig eine einfache und auch sichere Montage erlaubt. Dabei sind die Grundbedingungen zu erfüllen, dass die einzelnen Aderverbindungen gegen hohe thermische Belastungen, wie sie im Brandfalle auftreten, zuverlässig geschützt werden. Dazu werden die einzelnen Aderverbindungen mit geeigneten feuerbeständigen Formteilen so gegeneinander gesichert, dass die im Brandfall durch die thermische Zersetzung der gegen Feuchtigkeit isolierenden und die mechanische Stabilität gewährleistenden Bauteile freigesetzten Brandprodukte, vorwiegend bestehend aus Wasserdampf und anderen leitfähigen Gasen, leitende Kontakte, insbesondere Kurzschlüsse zwischen den einzelnen Leitern zuverlässig vermieden werden. Dadurch wird erreicht, dass die Kabelverbindung auch unter direkter Einwirkung von Feuer noch eine beträchtliche Betriebsdauer erreicht.

Dadurch kann eine beträchtliche intakte Betriebsdauer der Kabelverbindung auch unter der Einwirkung sehr hoher Temperaturen im Brandfall mit einem Höchstmass an Sicherheit erzielt werden. Dies wird nach der Lehre der Erfindung dadurch erreicht, dass die Einzeladerverbindungen nicht nur gegen Feuchtigkeit gegeneinander isoliert werden, sondern zusätzlich mit einem hoch-feuerbeständigen und keine Feuchtigkeit aufnehmenden Formteil geschützt werden. Dabei können diese Kabelverbindungen sowohl in Giessharz- wie auch in Schrumpftechnik hergestellt werden.

Die vorstehend geschilderten Anforderungen werden von der erfindungsgemässen Kabelverbindung erfüllt, bei der - ausgehend von dem beschriebenen Stand der Technik - über jeder elektrischen Aderverbindung neben dem elektrisch und gegen Feuchtigkeit isolierenden Schutz ein elektrisch isolierender, feuchtigkeitsabweisender, hochtemperatur- und daher feuerbeständiger, in der Hitze formstabil bleibender Formkörper als Umhüllung der einzelnen, durch hitzebeständige Abstandshalter dauerhaft beabstandeten Aderverbindungen angeordnet ist.

Abstandshalter als solche sind bekannt, beispielsweise durch die DE 90 04 349 U1. Die bekannten Abstandshalter sind zumeist Spritzgussteile aus nicht hitze- oder flammbeständigen Kunststoffen.

Kabelverbindungen, die einen Schutz gegen thermische Belastungen aufweisen, sind ausser der eingangs genannten Patentschrift auch noch durch weitere Veröffentlichungen bekannt geworden.

Bei bekannten Kabelverbindungen werden in einem Brandfalle durch die hohen thermischen Beanspruchungen bei dem gleichzeitig mechanische Kräfte wirken können, die Kabelmäntel und die Aderisolierungen wie auch die Schrumpfschläuche und Giessharzformstoffe verbrannt und dabei verformt, so dass es zwischen den Adern einerseits als auch zwischen einer oder mehreren Adern und der Umgebung, dem Erdpotential ziemlich rasch zu Kurzschlüssen kommen kann, so dass die Funktion der Kabelverbindung nicht mehr sichergestellt ist.

Dies gilt vielfach auch für Kabelverbindungen, bei denen Schrumpfschläuche aus einem selbstverlöschenden Material zur Isolierung und einem gewissen Brandschutz eingesetzt werden. Auch diese können jedoch den hohen thermischen Beanspruchungen im Brandfall nicht wirksam widerstehen; sie brennen nach einer gewissen Zeit unter der Flammenlast ab und gewähren dann die Funktionsfähigkeit der Kabelverbindung nicht mehr. Die dazu einsetzbaren Kunststoffe und deren Ausrüstung mit Flammschutzmaterialien sind in der Fachliteratur, und ferner in den DE 14 94 922 A1 und DE 15 69 123 A1 beschrieben.

Auch sind Giessharzformstoffe als Isolierstoff mit Additiven zur Selbstverlöschung bekannt, die jedoch - wie erwähnt - eine begrenzte Standfestigkeit im Brandfall zeigen, und die nicht geeignet sind, die Anforderungen zu erfüllen, wie diese in den einschlägigen Normen IEC 331 oder DIN 4102 Teil 12 festgelegt sind.

Die für die erfindungsgemässen Kabelverbindungen zu verwendenden Kunststoffe müssen mit einem halogenhaltigen Flammschutzmittel und Diantimontrioxid als Synergisten ausgerüstet sein. Auch kann die Ausrüstung der Kunststoffe mit halogenfreien Flammschutzmitteln, wie z.B. Hydroxiden oder auch Phosphorverbindungen diesen Zweck erfüllen. Durch diese Systeme wird die Flammbeständigkeit der Kabel, in Verbindung mit weiteren flammbeständigen Materialien wie Glimmerbewicklungen usw. auf den Einzeladern, für einen ausreichenden Zeitraum erreicht.

Auch die zum Stand der Technik obenerwähnte Ausführung nach der DE 35 33 375 C2 - entsprechend der EP 0 216 613 A2 - genügt den gestellten Anforderungen nicht, weil auch das dort verwendete feuerfeste Fasermaterial unter dem Schrumpfschlauch wegen seiner Faserstruktur stärkeren Flammbelastungen nicht standzuhalten vermag, wie praktische Versuche ergeben haben, weil sie den thermischen und mechanischen Beanspruchungen nicht gewachsen ist.

Es sind auch Aderverbindungen mit stark gefüllten Schutzwickeln bekannt; diese weisen den grossen Nachteil auf, dass die Schutzwickel durch die Brandbelastung versintern, um eine feuerfeste poröse Schicht zu bilden. Diese Schicht weist zwar eine gewisse thermische Beständigkeit auf, zeigt aber gleichzeitig die Tendenz, die sich bildende Feuchtigkeit aus den brennbaren Bestandteilen des Kabels bzw. der Kabelverbindung in dieser Schicht einzulagern und somit leitfähige Pfade zwischen den Einzeladern oder einer oder mehreren Adern und dem Erdpotential zu bilden, was zu Kurzschlüssen führen kann.

Durch die GB 2 295 501 A ist noch eine Hochvolt-Kabelverbindung mit einer Giessharzmuffe bekanntgeworden, bei der die Verbinder der Einzeladern mit einer Mastic-Füllung umgeben, die mit einer Schrumpfmuffe (RAYVOLVE) überzogen ist. Die Einzelkabel-Verbindungen sind mittels Abstandshaltern gegeneinander festgelegt, und innerhalb der Giessharzmuffe ist eine formsteife Isolierhülse mit einer Wandstärke von 3 bis 10 mm aus einem Polymerisat wie PE oder PVC, Acryl oder einem anderen Polymer.

Von dieser Ausbildungsweise ist jedoch eine Resistenz bzw. Funktionsbeständigkeit im Brandfall nicht zu erwarten, weshalb diese Schrift hier ausser Betracht bleiben kann.

Weitere Nachteile der bekannten Kabelverbindungen sind noch darin zu sehen, dass deren Montage umständlich und daher zeitaufwendig ist. Sowohl die einzelnen Wickel um die Einzeladerverbindungen und auch die gesamte Kabelverbindung müssen auch bei unübersichtlichen Einbaulagen vor Ort sicher und zuverlässig montiert werden können. Häufig befinden sich die Kabeltragelemente an schwer zugänglichen Orten, z.B. unmittelbar unter der Decke oder in Ecken eines Raumes und der Monteur muss dann die verschiedenen Arbeitsschritte unter sehr beengten räumlichen Bedingungen ausführen. Besonders das Aufbringen von Flammschutzwickeln aus einem feuerbeständigen Fasermaterial auf die Aderverbindungen erweist sich als schwierig, weil ein grösserer Raumbedarf dafür nötig ist, als oft zur Verfügung steht.

Diesen Schwierigkeiten begegnet die Erfindung durch die Schaffung einer Kabelverbindung, die sowohl den hohen Brandschutzanforderungen für öffentliche Gebäude und ähnliche Anlagen voll genügt und gleichzeitig eine einfache und auch sichere Montage erlaubt.

### Giessharztechnik:

Für die Montage einer Giessharzverbindungsmuffe werden die Enden der zu verbindenden Kabel vorsichtig abisoliert und nach dem Entfernen der Kabelaufbauelemente die Einzeladern freigelegt und für das Aufbringen der Verbinder vorbereitet. Über die jeweiligen Einzeladern eines Kabels werden isolierende Formkörper aus feuerbeständigem Werkstoff aufgeschoben und anschliessend die Enden der Einzeladern in herkömmlicher Technik mit Press- oder Schraubverbindern elektrisch miteinander verbunden. Über diese Verbindungsstellen werden anschliessend die feuerbeständigen Formkörper geschoben und die Zwischenräume zwischen den Formteilen und den Aderisolierungen mit einer Kitt- bzw. Dichtmasse so verschlossen, dass ein Eindringen des Giessharzes bei Vergiessen zuverlässig verhindert wird. Sind alle Aderverbindungen in beschriebener Weise hergestellt, dann können in einer vorteilhaften Ausbildung der Kabelverbindung an sich bekannte Abstandshalter, jedoch aus einem nicht brenn- bzw. entflammbaren und daher wärmeformstabilen Material, welches keine Feuchtigkeit aufnimmt, zur Beabstandung der Formkörper über den Aderverbindungen eingesetzt werden. Abstandshalter sind langgestreckte Formteile von mehrzackig sternförmiger oder einer mehrfach U-Profil-artigen Formgebung und erstrecken sich vorzugsweise längs der Kabelachsen beidseitig über die Einzeladerverbindungen hinaus. Anschliessend werden die Formschalen der Giessharzgarnitur in üblicher Weise über der Kabelverbindung montiert und auf dem Kabelmantel befestigt. Die Abdichtung der Formschalen auf den Kabelmänteln erfolgt ebenfalls in hinlänglich bekannter Weise. Danach wird der aushärtbare lsolierformstoff entsprechend der Vorschriften der Hersteller vorbereitet und in die Formschale vergossen. Nach dem Aushärten des Giessharzes ist die Kabelverbindung sowohl mechanisch als auch elektrisch hochbelastbar, und die Feuerbeständigkeit über einen längeren Zeitraum ist sichergestellt.

### Schrumpftechnik:

Die Kabelenden werden wie bei der Giessharztechnik für das Verbinden vorbereitet. Der Unterschied besteht hierbei darin, dass auf die Einzeladern nicht nur ein feuerbeständiger Formkörper, sondern auch ein Warmschrumpfschlauch in die sogenannte Parkposition gebracht wird. Nachdem die elektrische Aderverbindung in üblicher Weise mittels Verbindern hergestellt ist, wird der Warmschrumpfschlauch als elektrisch isolierende und gegen Feuchtigkeit abdichtende Umhüllung über den Verbinder geschoben und mittels einer Wärmequelle, Heissluft oder Flamme, auf den Verbinder geschrumpft. Dabei wird der Warmschrumpfschlauch so bemessen, dass er nach dem Schrumpfen auf beiden Seiten bis auf die jeweiligen Aderisolierungen reicht. Anschliessend wird der feuerbeständige Formkörper über den Schrumpfschlauch positioniert und erforderlichenfalls mit geeigneten Mitteln, z.B. einem Stück Isolierband fixiert. In einer vorteilhaften Ausbildung der Kabelverbindung kann zusätzlich über den Schrumpfschlauch der Aderverbindungen eine Lage Glimmerband gewickelt werden.

Wenn der Spleiss, die Gesamtheit der Aderverbindungen, hergestellt ist, können die Einzeladerverbindungen mit einem feuerbeständigen Abstandshalter in oben beschriebener Weise beabstandet fixiert werden und danach wird über den Spleiss ein weiterer Schrumpfschlauch geschrumpft, der so bemessen ist, dass er auf beiden Seiten bis auf die Kabelmäntel reicht. Eine weitere vorteilhafte Ausbildung der Kabelverbindung besteht darin, dass über den Spleiss ein zusätzliches feuerbeständiges Formteil geschoben und fixiert wird, bevor der äussere Schrumpfschlauch geschrumpft wird. Dieses zusätzliche feuerbeständige Formteil ist so bemessen, dass der Spleiss vollständig auf beiden Seiten überdeckt ist. Nach dem Abkühlen der erfindungsgemäss feuerbeständigen Muffe auf Raumtemperatur ist diese mechanisch und elektrisch voll belastbar.

Die verwendeten feuerbeständigen Formteile für die Isolierung der Einzeladerverbindungen und die Hilfsmittel für die Beabstandung derselben bestehen aus einem elektrisch isolierenden, keine Feuchtigkeit aufnehmenden hochtemperaturfesten und wärmeformstabilen Material, vorzugsweise aus einer Feuerfestkeramik bzw. einem hochtemperaturfesten Quarzglas oder Quarzgut.

In den Kabelverbindungen, die mittels Schrumpftechnik hergestellt werden, sind die Schrumpfschläuche vorzugsweise mit einem Flammschutzmittel ausgerüstet.

Ein weiterer Vorteil ergibt sich, wenn die Innenmuffen nicht direkt übereinander, sondern in der Längsachse versetzt angeordnet werden.

Dadurch, dass die Innenmuffen einzeln gegeneinander und zusätzlich gesamthaft nicht nur elektrisch isolierend und gegen Feuchtigkeit abgedichtet sondern auch gegen die Feuereinwirkung zuverlässig geschätzt sind, ergibt sich gleichzeitig eine grosse Widerstandsfähigkeit der gesamten Kabel-verbindung gegenüber einer Brandbeanspruchung. So konnten die Prüfkriterien der hohen Brandbeanspruchungen für öffentliche Gebäude über 90 Minuten bei 1000°C (Funktionserhalt) sowie für z.B. Ölplattformen über 180 Minuten bei 750°C (Isolationserhalt) für die Kabelverbindung erfüllt werden.

Mit dem Einsatz der erfindungsgemässen Kabelverbindungen kann auf den kompletten Austausch bereits verlegter Kabel bei Gebäudeerweiterungen oder Reparaturen bei mechanischen Beschädigungen verzichtet werden, ohne dass der Isolationserhalt oder der Funktionserhalt der bestehenden Systeme beeinträchtigt wird. Dadurch werden gleichzeitig erhebliche Materialeinsparungen erreicht und die Kosten für eine Instandhaltung gesenkt.

Die einzeln notwendigen Arbeitsschritte bei der Herstellung der erfindungsgemässen Kabelverbindung sind relativ einfach auch an schlecht zugänglichen Stellen und auf engem Raum ausführbar, so dass die Montage gegenüber der bisherigen Technik nicht nur wesentlich erleichtert, sondern letztendlich auch sicherer wird.

Durch den erfindungsgemässen Einsatz von exakt dimensionierten isolierenden und abdichtenden Schrumpfschläuchen sowie den Formteilen aus feuerbeständigen Materialien bzw. den Hilfsmitteln zur Beabstandung der Innenmuffen aus ebenfalls feuerfesten Materialien in relativ kleinen Dimensionen ist die fertige Kabel-Verbindung in Schrumpftechnik sehr schlank gestaltbar, leicht herzustellen und problemlos auch in dicht belegten Kabelpritschen zerlegbar.

Die so hergestellte Kabelverbindungen in Schrumpf- als auch Giessharztechnik sind sowohl elektrisch sicher als auch mechanisch und gegen hohe thermische Belastungen in einem Brandfall geschätzt.

Ausführungsbeispiele der Erfindung und deren Besonderheiten sind in der Zeichnung dargestellt und im folgenden näher erläutert. Es zeigen
- Fig. 1: eine für die Montage vorbereitete und teilweise montierte Einzeladerverbindungen der Kabelverbindung in Giessharztechnik;
- Fig. 2: in Teil-Schnittdarstellung eine Innenmuffe über den Verbinder einer Einzelader für eine Giessharz-Formschale;
- Fig. 3: eine fertig montierte Kabelverbindung mit vier Einzeladern in einer Giessharz-Formschale für das Vergiessen mit einem aushärtbaren Isolierstoff;
- Fig. 4: eine für die Montage in Schrumpftechnik vorbereitete und teil-montierte Verbindung von drei Einzeladern;
- Fig. 5: in Teilschnitt-Darstellung die Einzelheiten einer Innenmuffe über den Verbinder einer Einzelader für eine Schrumpfmuffe;
- Fig. 6: im Teilschnitt eine Kabelverbindung mit mehreren Einzeladern als fertig geschrumpfte und betriebsbereite Schrumpfmuffe.

Die Montage einer erfindungsgemässen, feuerbeständigen Kabelverbindung in Giessharztechnik wird in folgenden Arbeitsschritten ausgeführt:

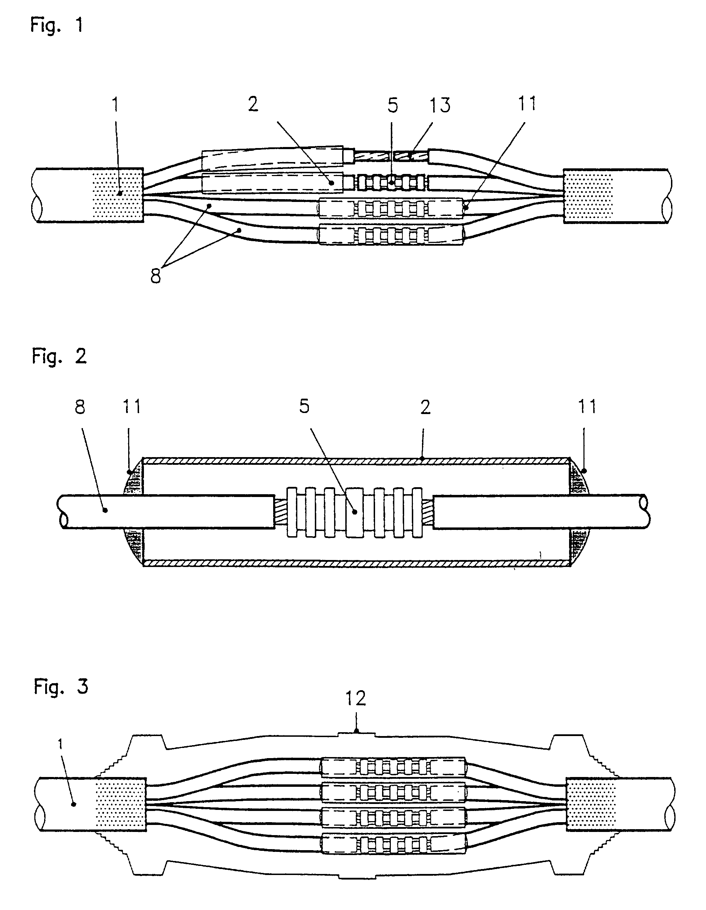

Die Aussenmäntel 1 der zu verbindenden Kabel werden in einer Weise entfernt, wie dies meist aus den Montageanweisungen der Muffenhersteller angegeben ist. Darauf werden die Einzeladern 8 aufgebogen, um freien Raum für die Montagearbeit zu schaffen, wie dies aus der Darstellung gemäss Fig. 1 ersichtlich ist. Darauf werden die Einzeladern abisoliert. Auf jeder der zu verbindenden Einzeladern wird ein inneres Isolierrohre 2 in eine sog. "Parkposition" aufgebracht, und danach werden die Einzelleiter 13 mittels der vorgesehenen Verbinder 5 - in Fig. 1 bis 3 als Pressverbinder gewählt - miteinander elektrisch verbunden, damit daraufhin die inneren Isolierrohre 2 mittig über die Verbinder geschoben werden können, wie dies aus Fig. 2 ersichtlich ist.

Nun kann der ringförmige Hohlraum zwischen dem inneren Isolierrohr 2 und der Aderisolierung 8 an beiden Enden mit einer Abdichtmastik 11 verschlossen werden. Dadurch wird verhindert, dass zwischen den Isolierrohrenden und der Aderisolierung vor dem Aushärten der Isolierstoff in diesen Hohlraum eindringt und unter die Isolierrohre fliesst; dadurch wird vermieden, dass im Brandfall eine grosse mechanische Belastung auf den Bereich der Verbindung der Einzeladern ausgeübt wird.

Nachdem alle inneren Isolierrohre 2 auf diese Weise abgedichtet sind, wird die Giessharz-Formschale 12 um die Kabelverbindungsstelle herumgelegt, befestigt und abgedichtet, so dass sie mit dem aushärtbaren Isolierstoff vergossen werden kann. Nach Ablauf der Aushärtzeit ist die feuerbeständige Kabelverbindung elektrisch und mechanisch belastbar.

Bei Anwendung der Schrumpftechnik ist bei der Montage einer feuerbeständigen Kabelverbindung nach der Erfindung wie folgt vorzugehen:

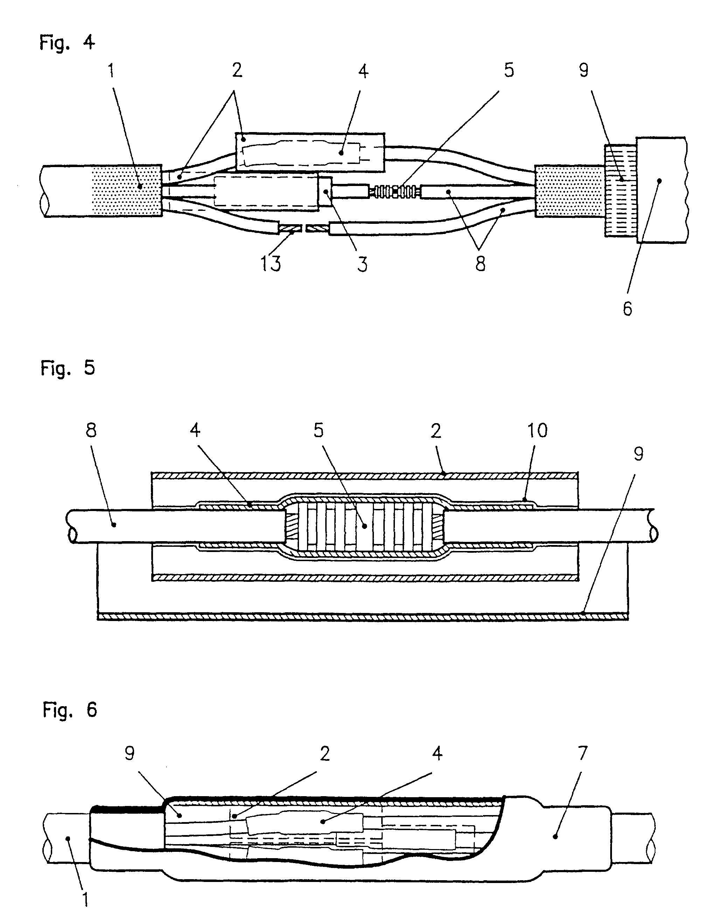

Gleichermassen wie bei der Giessharztechnik müssen zur Vorbereitung die zu verbindenden Kabelenden abisoliert, freigelegt und aufgebogen werden, damit zunächst das äussere Isolierrohr 9 und der äussere Schrumpfschlauch 6 auf eines der Kabelenden aufgeschoben werden kann, wie dies aus Fig. 4 ersichtlich ist.

Vorteilhafterweise können entsprechend diesem in Fig. 4 gezeigten Ausführungsbeispiel die Verbindungsstellen der Einzeladern 8 gegeneinander längsversetzt angeordnet sein. Darauf wird auf jede zu verbindende Einzelader 8 jeweils ein inneres Isolierrohr 2 und ein innerer Schrumpfschlauch 3 in ein "Parkposition" verbracht, und sodann können die Einzelleiter 13 mittels ihren Verbindern 5 in bekannter Weise elektrisch verbunden werden.

Danach werden die inneren Schrumpfschläuche 4 mittels einer Wärmequelle so über die Verbinder 5 geschrumpft, dass die Schrumpfschläuche 4 beidseitig die Isolierung der Einzeladern ausreichend überdecken. Erfindungsgemäss kann vorteilhafterweise über diese Schrumpfschläuche 4 ein feuerbeständiger Bandwickel 10, z.B. aus Glimmerband aufgebracht werden. Danach werden die inneren Isolierrohre 2 über die Schrumpfschläuche 4 diese ausreichend beidendig überdeckend geschoben und darauf das äussere Isolierrohr 9 so über den gesamten Verbindungsbereich positioniert, dass alle Innenmuffen gleichmässig auf beiden Seiten überdeckt sind.

Abschliessend erfolgt das Schrumpfen des äusseren Schrumpfschlauches 9 derart, dass das äussere Isolierrohr beidseitig gleichmässig überdeckt ist und eine dichte Verbindung zwischen dem äusseren Schrumpfschlauch 9 und dem Aussenmantel 1 erreicht ist. Werden nur geringe mechanische Belastungen der Kabelverbindung auch im Brandfall erwartet, kann, auch um eine besonders schlanke Kabelverbindung herzustellen, auf die Verwendung des äusseren Isolierrohres verzichtet werden.

## Patentansprüche

1. Elektrische Kabelverbindung für ein- oder mehradrige Energie- und Steuerkabel, bei der die elektrisch isolierende und abdichtende Umhüllung aus einer Giessharz- oder einer Schrumpfmuffe (12, 9) besteht, und bei der die Adern (8) im Bereich der Verbinder (5) mit einer formstabilen Umhüllung (2) und diese von der die Aderisolierung (1) überdeckenden äusseren Umhüllung umschlossen sind,
gekennzeichnet dadurch,
dass über jeder elektrischen Aderverbindung neben dem elektrisch und gegen Feuchtigkeit isolierenden Schutz ein elektrisch isolierender, feuchtigkeitsabweisender, hochtemperatur- und daher feuerbeständiger, in der Hitze formstabil bleibender Formkörper (2) als Umhüllung der einzelnen, durch hitzebeständige Abstandshalter dauerhaft beabstandeten Aderverbindungen (5) angeordnet ist.

2. Kabelverbindung nach Anspruch 1, dadurch gekennzeichnet, dass der formstabile Formkörper (2) aus einer Feuerfestkeramik oder einem hochtemperaturbeständigen Quarzglas oder Quarzgut besteht.

3. Kabelverbindung nach den Ansprüchen 1 und 2, dadurch gekennzeichnet, dass der formstabile, feuerbeständige Formkörper (2) zur Umhüllung jeder einzelnen Aderverbindung (5) aus innen hohlen Formteilen gebildet ist.

4. Kabelverbindung nach Anspruch 3, dadurch gekennzeichnet, dass die innen hohlen Formteile vorzugsweise Rohre sind.

5. Kabelverbindung nach Anspruch 1 und 2, dadurch gekennzeichnet, dass zur dauerhaften Beabstandung der Aderverbindungen (8, 5) hitzbeständige Formteile mit einem mehrzackig sternförmigen oder mehrfach-U-Profil-ähnlichen Querschnitt angeordnet sind.

6. Kabelverbindung nach einem der vorangegangenen Ansprüche, dadurch gekennzeichnet, dass die Einzeladerverbindungen (5) längs der Kabelachsen gegeneinander versetzt angeordnet sind.

7. Kabelverbindung in Giessharztechnik nach den Ansprüchen 1 und 2, dadurch gekennzeichnet, dass die über die elektrischen Aderverbindungen (5) aufgeschobenen formstabilen und feuerbeständigen Formkörper (2) gegenüber den Aderisolierungen (8) mit einer Abdichtmastik (11) abgedichtet sind.

8. Kabelverbindung in Giessharztechnik nach Anspruch 7, dadurch gekennzeichnet, dass die aus einer elektrischen Verbindung (5) und dem formstabilen, feuerbeständigen, gegenüber den Aderisolierungen (8) abgedichteten Formkörper (2) bestehenden Innenmuffen durch hitzebeständige Formteile voneinander beabstandet sind.

9. Kabelverbindung in Schrumpftechnik nach einem der Ansprüche 1 bis 6, dadurch gekennzeichnet, dass der äussere (6, 7) und die inneren Schrumpfschläuche (3, 4) mit einem Flammschutzmittel ausgerüstet und auf der Innenseite mit einer Dichtmasse, vorzugsweise einem Heissschmelzkleber, beschichtet sind.

10. Kabelverbindung in Schrumpftechnik nach Anspruch 9, dadurch gekennzeichnet, dass die Schrumpf-Umhüllung (9) aller Aderverbindungen (5) ein Formteil mit hohlem Querschnitt ist.

11. Kabelverbindung nach Anspruch 10, dadurch gekennzeichnet, dass die inneren Schrumpfschläuche (4) auf beiden Seiten auf die Isolierung (8) der Einzelleiter (13) reichen und von den formstabilen und feuerbeständigen Formkörpern (2) vollständig umschlossen sind.

12. Kabelverbindung nach Anspruch 9, dadurch gekennzeichnet, dass die Verbinder (5) der jeweiligen Einzeladern (8, 13) mit einem Bandwinkel (10) aus einem feuerbeständigen Wickel, vorzugsweise einem Glimmerbandwickel, überdeckt werden, der beidseitig bis auf die Aderisolierungen (8) geführt ist.

## Claims

1. Electrical cable join for single- or multi-wire power and control cables in which the electrically insulating and sealing sheath consists of a cast resin or shrink sleeve (12, 9) and in which the wires (8) in the area of the connector (5) are enclosed by shape-retaining sheathing (2) and the latter by the outer sheathing that covers the wire insulation (1),
characterised in that
over each electrical wire join, in addition to the protection that insulates electrically and against moisture, there are electrically insulating,
moisture-repellent, high temperature-resistant and therefore fireproof moulded components (2), which retain their shape in the heat, as sheathing for the individual wire joins(5), which are permanently spaced by heat-resistant spacers.

2. Cable join according to claim 1, characterised in that the shape-retaining moulded component (2) consists of refractory ceramics or of a high temperature-resistant quartz glass or translucent fused quartz.

3. Cable join according to claims 1 and 2, characterised in that the shape-retaining, fireproof moulded component (2) is formed from moulded parts that are hollow inside as sheathing for each individual wire join.

4. Cable join according to claim 3, characterised in that the moulded parts that are hollow inside are preferentially tubes.

5. Cable join according to claims 1 and 2, characterised in that for the permanent spacing of the wire joins (8, 5), there are heat-resistant moulded parts with a cross-section shaped like a multi-pointed star or similar to a multiple U-profile.

6. Cable join according to one of the above claims characterised in that the individual wire joins (5) are offset against one another along the cable axes.

7. Cable join made by the cast resin method according to claims 1 and 2 characterised in that the shape-retaining and fireproof moulded components (2) that are slid over the electrical wire joins (5) are sealed against the wire insulations (8) by a sealing mastic (11).

8. Cable join produced by the cast resin method according to claim 7 characterised in that the inner sleeves consisting of an electrical connection (5) and the shape-retaining, fireproof moulded components (2), which are sealed against the wire insulations (8), are distanced from one another by heat-resistant moulded parts.

9. Cable join produced by the shrink method according to one of the claims 1 to 6 characterised in that the outer (6, 7) and the inner (3, 4) shrink tubes are treated with a flame-proofing agent and coated on the inside with a sealing compound, preferentially a hot-melt adhesive.

10. Cable join made by the shrink method according to claim 9 characterised in that the shrink sheathing (9) of all wire joins (5) is a moulded part with a hollow cross-section.

11. Cable join according to claim 10 characterised in that the inner shrink tubes (4) extend over the insulation (8) of the individual conductors (13) and are completely enclosed by the shape-retaining and fireproof moulded components (2).

12. Cable join according to claim 9 characterised in that the connectors (5) of the individual conductors (8, 13) are covered by a tape wrap (10) consisting of a fireproof wrap, preferentially a mica tape wrap, which is applied up to the wire insulations on both sides.

## Revendications

1. Raccord électrique pour câbles d'alimentation et de commande unifilaires ou multifilaires, dont l'enveloppe d'isolation et d'étanchéité est constituée par un manchon en résine moulée ou par un manchon fretté (12, 9), et dont chacun des fils (8) est entouré dans la zone des connecteurs (5) d'une enveloppe indéformable (2), lesdites enveloppes étant à leur tour entourées par l'enveloppe extérieure entourant l'isolation des fils (1), caractérisé en ce que chaque fil de raccord électrique est entouré, en plus de l'isolant électrique et de la protection contre l'humidité, d'un corps indéformable à la chaleur (2) électriquement isolant, hydrofuge, résistant aux hautes températures et par là même au feu, les raccords des fils (5) étant maintenus en permanence à une distance constante entre eux au moyen d'écarteurs.

2. Raccord pour câbles selon la revendication 1, caractérisé en ce que le corps indéformable (2) est fait en céramique réfractaire, en verre quartzeux résistant aux hautes températures ou en silice vitreuse.

3. Raccord pour câbles selon les revendications 1 et 2, caractérisé en ce que le corps indéformable et résistant au feu (2) qui enveloppe chaque fil (5), est constitué de pièces moulées à parois creuses.

4. Raccord pour câbles selon la revendication 3, caractérisé en ce que les pièces moulées à parois creuses sont préférentiellement des tubes.

5. Raccord pour câbles selon les revendications 1 et 2, caractérisé en ce que le maintien permanent de la distance entre les raccords (8, 5) est assuré par des formes moulées résistantes à la chaleur et disposées selon une section ayant la forme d'une étoile à plusieurs pointes ou d'un profil en U multiple.

6. Raccord pour câbles selon une des revendications précédentes, caractérisé en ce que les raccords entre les fils individuels (5) sont disposés en quinconce le long de l'axe du câble.

7. Raccord pour câbles en technologie de résine moulée selon les revendications 1 et 2, caractérisé en ce que les pièces indéformables et résistantes au feu (2) passées autour des raccords de fils (5) sont rendues étanches contre les isolations des fils (8) au moyen d'un mastic isolant (11).

8. Raccord pour câbles en technologie de résine moulée selon la revendication 7, caractérisé en ce que les manchons intérieurs constitués d'un connecteur électrique (5) et du corps moulé (2) indéformable, réfractaire et rendu étanche par rapport à l'isolation des fils (8), sont maintenus à distance entre eux au moyen de pièces moulées indéformables.

9. Raccord pour câbles en technologie thermorétractable selon une des revendications 1 à 6, caractérisé en ce que la gaine thermorétractable extérieur (6, 7) et les gaines thermorétractables intérieures (3, 4) sont ignifugées et présentent une couche assurant l'étanchéité sur la face intérieure, préférablement une colle à fusion.

10. Raccord pour câbles en technologie thermorétractable selon la revendication 9, caractérisé en ce que l'enveloppe thermorétractable (9) commune à tous les connecteurs de fils (5) est une pièce moulée à section creuse.

11. Raccord pour câbles selon la revendication 10, caractérisé en ce que les gaines thermorétractables intérieures (4) s'étendent dans les deux sens par dessus l'isolation (8) des fils individuels (13), étant complètement entourées par les pièces moulées indéformables et réfractaires (2).

12. Raccord pour câbles selon la revendication 9, caractérisé en ce que les connecteurs (5) de chaque fil individuel (8, 13), sont enveloppés d'un ruban réfractaire enroulé (10), préférentiellement un ruban de mica, enroulé dans les deux sens jusqu'à couvrir les isolants des fils (8).
